# EUROPEAN PATENT APPLICATION

(11) **EP 1 591 894 A2**
(43) Date of publication of application: **02.11.2005**
(21) Application number: 04022712.6
(22) Date of filing: 23.09.2004
(51) Int. Cl.: G06F 9/46

(54) **Method and program for linking different applications through data displayed on screen**

(30) Priority: 30.03.2004 JP 2004101435
(71) Applicant: FUJITSU LIMITED, Kawasaki-shi, Kanagawa 211-8588 (JP); Fujitsu Frontech Limited, Inagi-shi, Tokyo 206-8555 (JP)
(72) Inventor: Maeta, Takayuki, Inagi-shi Tokyo 206-8555 (JP); Katsumata, Yutaka, Inagi-shi Tokyo 206-8555 (JP); Eguchi, Shinichi, Inagi-shi Tokyo 206-8555 (JP)
(74) Representative: HOFFMANN EITLE

(57) **Abstract**

An application linking technology enables data formatted among many-to-many applications to be communicated. From a window displayed by at least one first application, a necessary information item for an operation of at least one second application is collected. When the collected information items contain items not matching the data format of the second application, data conversion is performed on an unmatched information item to a data format of the second application. A matching information item and a data-converted information item whichever is necessary to the second application is transmitted. A processing result transmitted from the second application is received. Data conversion is performed on an unmatched processing result to a predetermined format when a processing result contains data not matching the predetermined format. A processing result matching a predetermined format and a data-converted processing result is output in a predetermined position of the window with a predetermined data attribute.

## Description

### Background of the Invention

### Field of the Invention

The present invention relates to a technology of placing a link between different applications through data displayed on the screen.

### Description of the Related Art

The Applicant has filed a patent for the technology of transmitting the information (inquiry information or information to be processed when a request is issued to a linked application) obtained from the image data of a first application displayed on the screen to a second application without amending the two existing applications to be linked, receiving a processing result from the second application, and using the result in the process of the first application (patent literature 1). This refers to an application linking program called a screen plug. In the present specifications, an application issuing a request to process by transmitting information including an image is called a target application (hereinafter referred to simply as a "target APL"), and an application which receives a request and returns a processing result is called a linked application (hereinafter referred to simply as a "linked APL").

However, in the conventional linking system, the data obtained from a target APL is transmitted to a linked APL without any amendment. Therefore, for example, a target APL manages the name of a place by a place name such as "1234 Second Avenue, Chicago, Illinois 60626", etc. while a linked APL cannot link applications because of different formats of data when an address is managed by postal code such as "206-xxxx", etc. Similar problems occur when symbols "¥", ",", etc. in the expression of an amount are used.

When information required by a linked APL is distributed among applications other than a target APL, all information cannot be obtained, and insufficient information can be transmitted. On the other hand, the information received from a linked APL cannot be transmitted to an application if it does not belong to linked APLs.
[Patent Literature 1] PCT/JP03/00802

### Summary of the Invention

The present invention aims at providing an application linking method and a program capable of converting inquiry information from a target APL to a linked APL and a processing result from the linked APL into the format of a destination.

The present invention also aims at providing an application linking technology of collecting information from an application related to a target APL (hereinafter referred to as a "related APL") and transmitting the information to a linked APL, transmitting collected information to a plurality of linked APLs, and outputting a received processing result from a linked APL to not only a target APL but also a linked APL of the target APL.

According to an aspect of the present invention, an application linking method includes: a collecting step of collecting, from a window displayed by at least one first application, necessary information item for an operation of at least one second application; a first converting step of performing data conversion on an unmatched information item to a data format of the second application when the collected information items contain items not matching the data format of the second application; a step of transmitting a matching information item and a data-converted information item whichever is necessary to the second application; a step of receiving a processing result transmitted from the second application; a second converting step of performing data conversion on an unmatched processing result to a predetermined format when a processing result contains data not matching the predetermined format; and an output step of outputting a processing result matching a predetermined format and a data-converted processing result in a predetermined position of the window with a predetermined data attribute.

According to another aspect of the present invention, an application linking support software (simply referred to as a present software) includes descriptions of steps to be performed by a computer, including: a collecting step of collecting, from a window displayed by at least one first application, necessary information item for an operation of at least one second application; a converting step of performing data conversion on an unmatched information item to a data format of the second application when the collected information items contain items not matching the data format of the second application; and a step of transmitting a matching information item and a data-converted information item whichever is necessary to the second application.

The present software can further include descriptions of steps to be performed by a computer, including: a step of receiving a processing result transmitted from the second application; a converting step of performing data conversion on an unmatched processing result to a predetermined format when the received processing result contains data not matching the predetermined format; and an output step of outputting a processing result matching a predetermined format and a data-converted processing result to a predetermined position of the window with a predetermined data attribute.

The present software can further include output item definition data containing a predetermined position and a predetermined data attribute for each processing result, and an output step outputs the processing result based on the output item definition data.

The present software can further include first data conversion definition data including descriptions of an identifier of an information item or a processing result and a converting method relating to an unmatched information item, processing result, or both, and the converting step performs data conversion according to data conversion definition information.

The above-mentioned information item can be either image data or an object.

According to a further aspect of the present invention, the computer-readable storage medium storing a application linking support software can be provided.

### Brief Description of the Drawings

FIG. 1 is a rough block diagram of the entire application linking system according to the present invention;
FIG. 2 is a block diagram of the computer-based apparatus to which the present invention can be applied;
FIG. 3 shows the concept of the principle of application linking according to an embodiment of the present invention;
FIG. 4 is a flowchart of the system setting program shown in FIG. 1;
FIG. 5 is a flowchart of a window input/output definition routine 126 and shows an example of data set by the routine;
FIG. 6 is a flowchart of a data conversion definition subroutine 130;
FIG. 7 shows the configuration of a configuration DB 150 generated by a system setting program 110;
FIG. 8 shows an example of data conversion definition information set by a data conversion definition subroutine 130;
FIG. 9 is a flowchart of a linking information collection program 200 according to the present invention;
FIG. 10 is a flowchart of a communications unit 300;
FIG. 11 is a of a data output unit 360;
FIG. 12A shows an example of a display window Wt of a target APL 40;
FIG. 12B shows an example of a screen type determination information 172 for identification of a display window Wt;
FIGs. 13A through 13C shows a state of collecting linking information from a window Wt;
FIG. 14 show the outline of specifying a window Wr of a related APL 50;
FIG. 15 show a state of collecting linking information from a window Wr;
FIG. 16 shows a display screen for confirmation with a user about the continuation of the process by collectively displaying collected linking information;
FIG. 17 shows an example of displaying a link result;
FIG. 18 shows a display example for confirmation with a user about an intention to continue a process of displaying a link result;

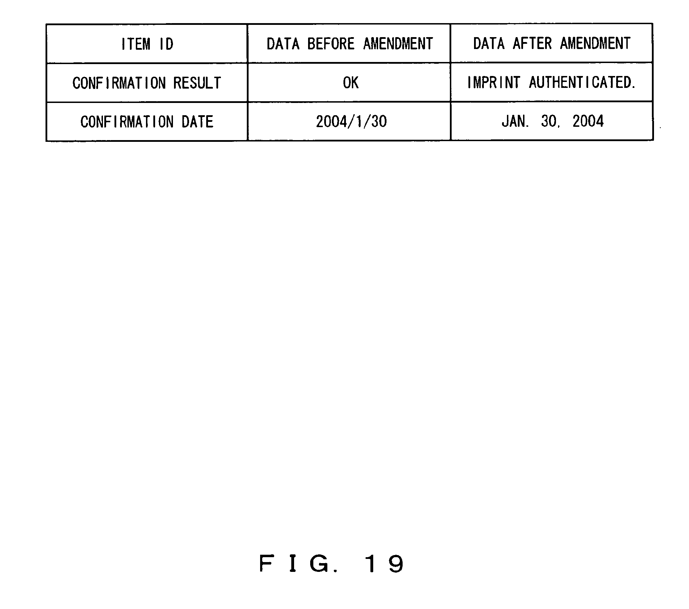

FIG. 19 shows the state before and after data conversion on a link result; and
FIG. 20 shows the display contents of windows Wt and Wr when the continuation of the process is selected on the display window shown in FIG. 18.

### Detailed Description of Preferred Embodiments

The present invention is described below in detail by referring to the embodiments and the attached drawings. The same components shown in a plurality of figures are assigned the same reference numerals.

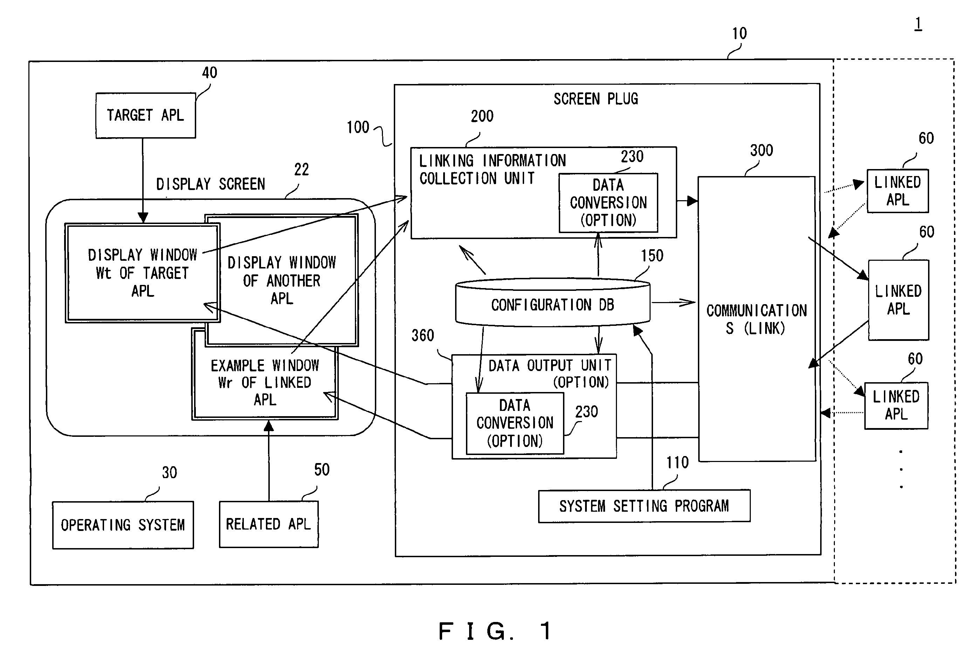

FIG. 1 is a rough block diagram for explanation of the principle of the present invention. In FIG. 1, a system 1 to which the present invention is applied includes a computer 10 provided with a screen plug 100 which is an application linking support system (program) according to the present invention. A linked APL 60 can be contained in the computer 10, or can be provided for a computer other than the computer 10 and capable of communicating with the computer 10.

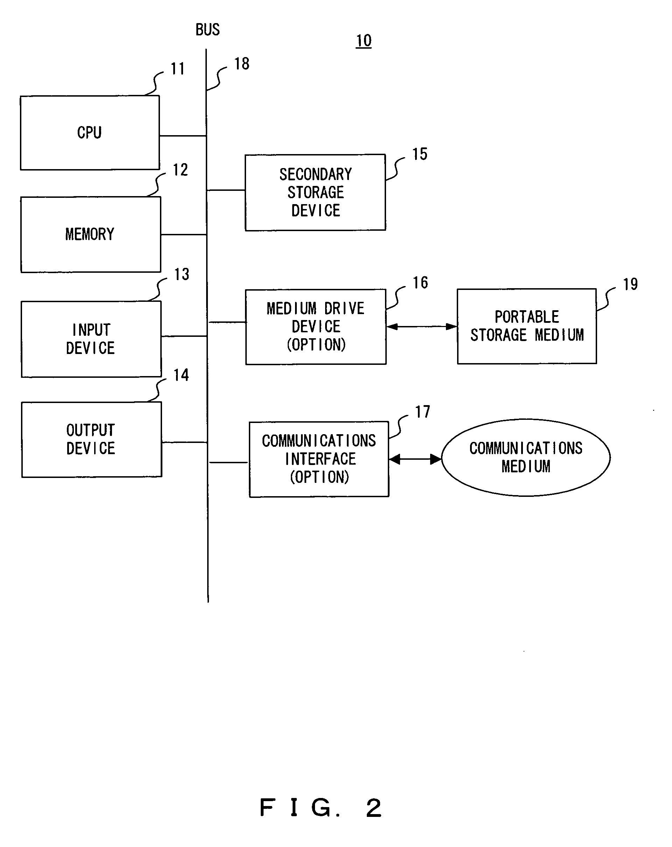

FIG. 2 is a block diagram showing a typical hardware configuration of the computer 10 shown in FIG. 1. In FIG. 2, the computer 10 can be configured in any way so far as it comprises a CPU (central information processing unit) 11, memory 12, an input device 13, an output device 14, a secondary storage device 15, and a bus 18 for interconnection of them. When the linked APL 60 is provided for a computer other than the computer 10, it is necessary for the computer 10 to comprise a communications interface 17 capable of communicating with a computer having the linked APL 60. Furthermore, the computer 10 can also comprise a portable storage medium drive device 16 so as to use a portable storage medium 19. The CPU 11 performs a necessary process by executing a program according to the present invention using the memory 12. The memory 12 stores the screen plug 100 which is an application linking support program, and the program is executed by the CPU 11, thereby allowing the computer to function as an application linking support apparatus. The input device 13 can be, for example, a keyboard, a pointing device, a touch panel, etc. for use by a user in inputting a command and information. The output device 14 can be, for example, a display, a printer, etc. for use in issuing an inquiry to a computer user, outputting a processing result, etc. The secondary storage device 15 can be, for example, a magnetic disk device, an optical disk device, an magneto-optical disk device, etc. The secondary storage device 15 realizes a screen information DB 229 described later. Furthermore, the above-mentioned program can be stored in the secondary storage device 15 of a computer, and can be loaded into the memory 12 for use as necessary. The portable storage medium 19 can be any computer-readable storage medium such as a memory card, a memory stick, a flexible disk, a CD-ROM (compact disc read only memory), an optical disk, an magneto-optical disk, a DVD (digital versatile disc), etc. The portable storage medium 19 can store the above-mentioned application linking support program so that the program can be loaded into the memory 12 of a computer for use as necessary. The communications interface 17 can communicate with an external device over any network (line) such as a LAN, a WAN, etc. for data conversion required in the communications. Furthermore, as necessary, it receives the above-mentioned program from an outside device, and loads it into the memory 12 of a computer for use later.

The principle of the present invention is explained below by referring to FIG. 1. It is assumed that the computer 10 can simultaneously display a plurality of windows on a display screen 22 provided as a part of the output device 14. That is, the secondary storage device 15 of the computer 10 is assumed to have an operating system 30 for supporting a multi-window. Any operating system for supporting a multi-window can be used, but the present embodiment is explained below by referring to Windows (registered trademark) of Microsoft (registered trademark). Furthermore, the computer 10 is also provided with the target APL 40 to be mainly processed by a user, a related APL 50 for performing the functions related to the target APL 40, and the screen plug 100 according to the present invention. The linked APL 60 can be arranged after being distributed to a plurality of computers.

The display screen 22 is assumed to be provided with a window Wt displayed by the target APL 40, a window Wr displayed by the related APL 50, and a window displayed by any other application.

The screen plug 100 comprises a system setting program 110 for flexible customization depending on the target APL to be linked by a user and the linked APL so that there can be a link between a broad target APL (and its related APL) and a linked APL. The contents set by a user using the system setting program 110 are recorded in the configuration DB 150 having the name of a linking process. For each linking process requested by a user, any number of configuration DBs 150 can be generated.

When the configuration DB 150 is generated by setting a system, the screen plug 100 is activated with the linking process name specified, and is operated depending on the setting contents of the configuration DB 150. The screen plug 100 at least comprises the linking information collection program 200 for identifying the window(s) of the target APL 40 and the related APL 50 set in the configuration DB 150 from among the windows currently being displayed on the display screen 22, and the communications (or linked) unit 300 for passing the collected link data to the linked APL 60. Furthermore, the screen plug 100 can also comprise the data output unit 360 for receiving the processing result from the linked APL 60 by the communications unit 300, and outputting the processing result received by the communications unit 300 to the target APL 40 and the related APL 50 or the display windows of them. The linking information collection program 200 or the data output unit 360 or both of them can comprise a data conversion unit 230 for converting a data format depending on the destination of data.

### [First Embodiment]

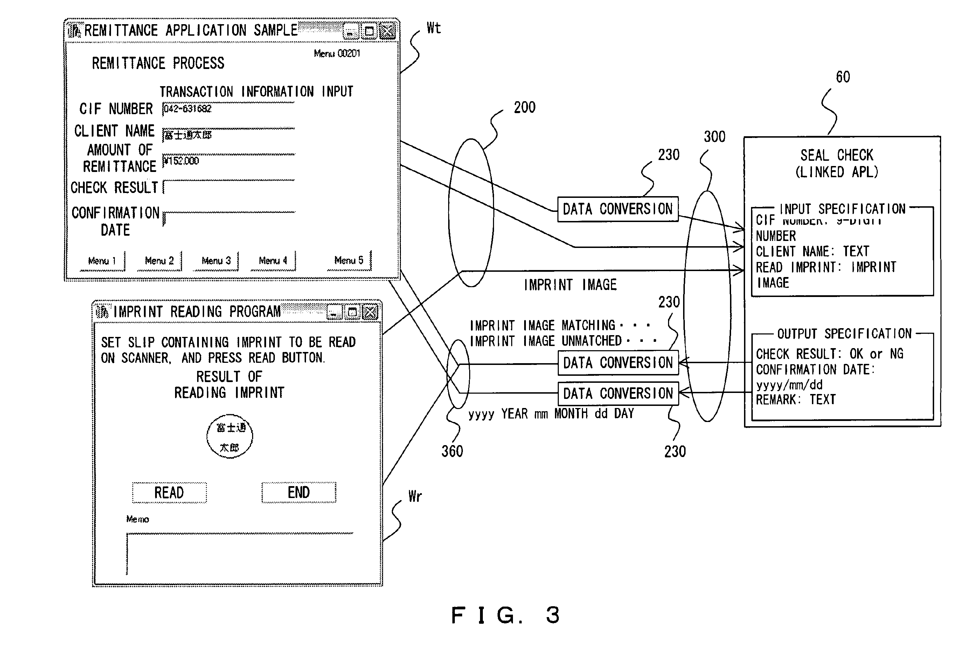

FIG. 3 shows the concept of the method for linking applications using a screen plug according to the first embodiment of the present invention. In the explanation of the following embodiments, as shown in FIG. 3, linking information is collected from the window Wt displayed by the remittance application program of the target APL 40 and the window Wr displayed by the imprint reading program, the obtained linking information is transmitted to the seal check system which is the linked APL 60, a result of a seal check is received from the seal check system, and the result is output to the displayed windows Wt and Wr. In the window Wt of the target APL 40, a CIF (customer interaction file) number "042-631682", a client name " 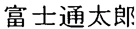 " (Fujitsu Taro ("Fujitsu" indicates a family name, and "Taro" indicates a first name), and an amount of remittance of "¥152,000" are displayed. In the window Wr of the related APL 50, an imprint image, a "read" button, and "end" are displayed. Also in the window Wt, blank columns for entry of a check result and a confirmation date are displayed.

In the attached drawings, the enclosure of " 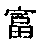 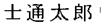 " indicates an imprint of a seal. In this document, the present invention is explained using an imprint, but the imprint can be replaced with any biometrics information (pattern) capable of identifying a person. In this case, the element 60 can be a biometrics pattern checking system in place of the seal check system.

The windows Wt and Wr can contain not only an image of bit map data, but also various objects. These objects include, in addition to an HTML tag, a URL (uniform resource locator), various objects supported by the OS.

On the other hand, a seal checking program 60 receives a 9-digit CIF number, a client name of text data, and an imprint image which is image data as input, and the received imprint image is compared with a registered imprint image specified by a CIF number and a client name. Then, a comparison result of OK or NG and the current date in a form of "yyyy/mm/dd" are returned.

When the screen plug 100 is activated with the seal check specified as a linking process name, the screen plug 100 detects windows Wt and Wr on the display screen, retrieves the CIF number of "042-631682" and the client name of " 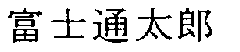 " from the window Wt, and retrieves an imprint image from the window Wr. At this time, since the CIF number of "042-631682" does not match the input specifications of the seal checking program 60, the hyphen (symbol -) of the CIF number retrieved from the window Wr is deleted into 9-digit numeral of "042631682". The above-mentioned client name, the converted CIF number, and the imprint are transmitted to the seal checking program 60 through the communications unit 300. The check results of OK and NG are converted into "The imprint has been authenticated." and "The imprint cannot be authenticated." The confirmation date of "yyyy/mm/dd" is converted into a format of "year of yyyy, month of mm, day of dd". Thus, the converted data is output to a predetermined window through the data output unit 360.

By referring to an example of the above-mentioned linking, the operation of the screen plug 100 according to an embodiment of the present invention is explained below. First, the method of making settings by the system setting program 110 such that a desired linking operation can be realized is explained, and then a linking operation after setting the system is described.

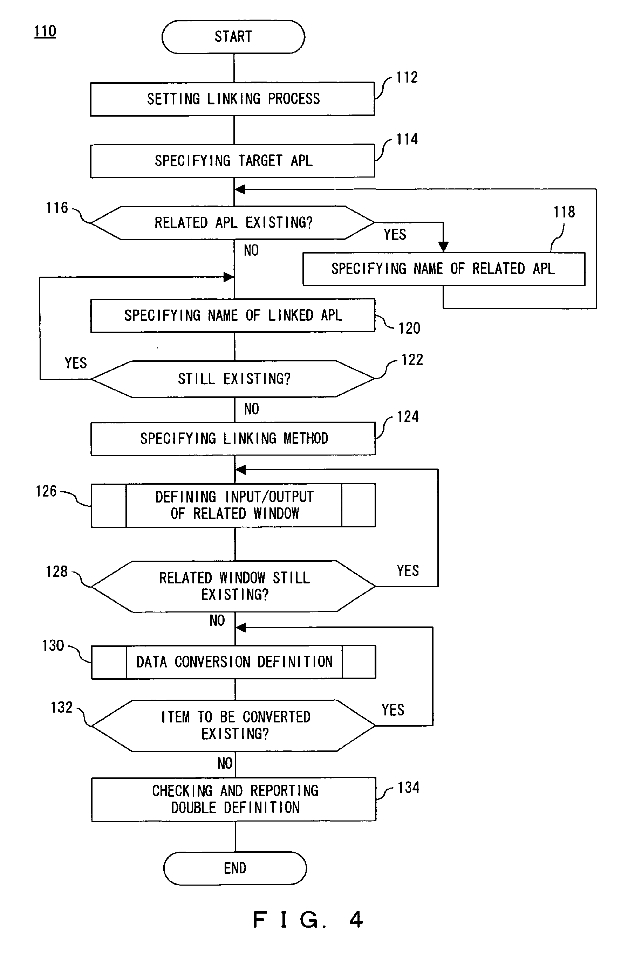

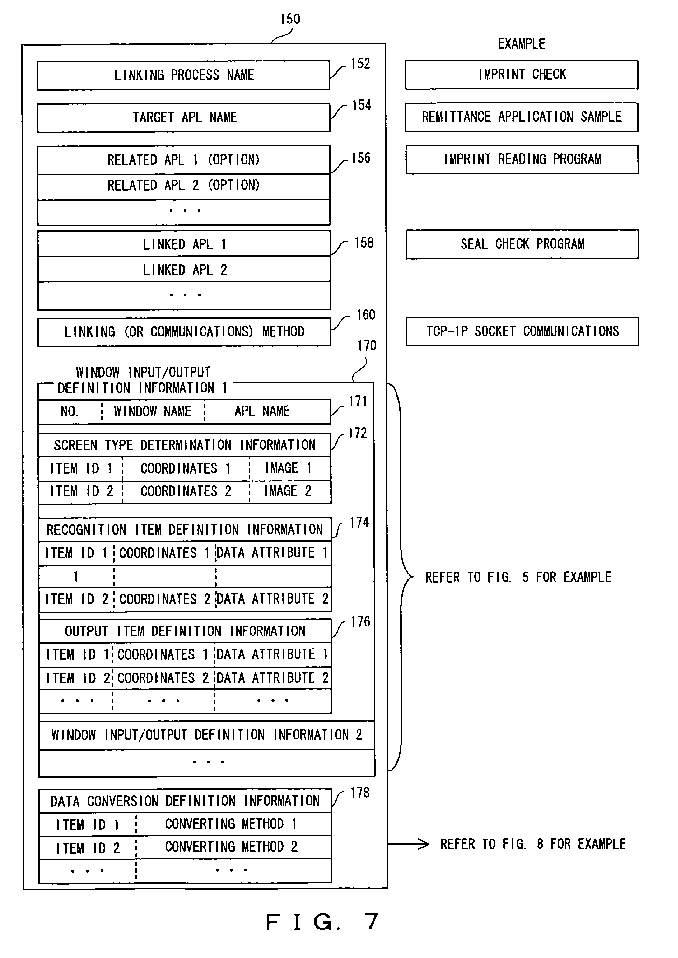

FIG. 4 is a flowchart showing the procedure of setting a system using the system setting program 110 according to an embodiment of the present invention. FIG. 7 shows the configuration of the configuration DB 150 generated as a result of setting a system by the system setting program 110. When the system setting program 110 is activated, first in step 112, a linking process name 152 of a linking process to be set by a user is set. The name is first set so that a set data shown in FIG. 7 generated as a result of the system setting process therefrom can be discriminated from the set data for another linking process. In the example shown in FIG. 3, for example, as shown in FIG. 7, "seal check", etc. is set. Then, in step 114, a target APL name 154 is specified. In this example, the "remittance application sample" is specified. In the determining step 116, it is determined whether or not there is a related APL. If YES, a related APL name 156 is specified in step 118. In this example, the "imprint reading program" is specified. The above-mentioned process is performed on all related APLs. Then, in step 120, a linked APL name 158 is specified (a seal checking program in this example). In step 122, it is determined whether or not there is still a linked APL. If YES, then control is passed to step 120. If the determination result in step 122 is NO, then in step 124, a linking or communications method 160 is specified. A possible communications method can be, for example, a TCP/IP (transmission control protocol/ Internet protocol), an HTTP (hyper text transmission protocol), an API (application programming interface), a DLL (dynamic link library), etc.

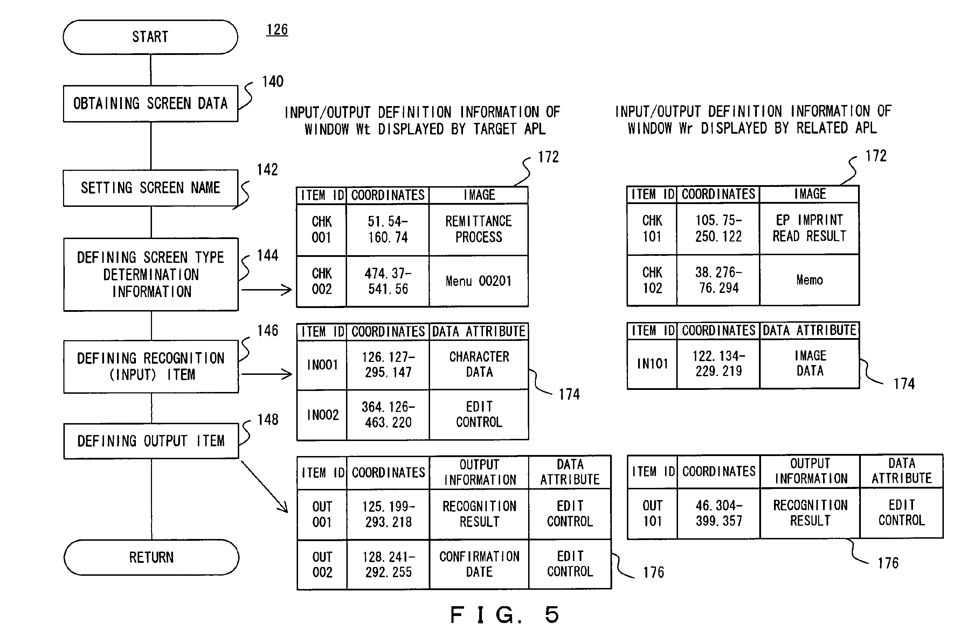

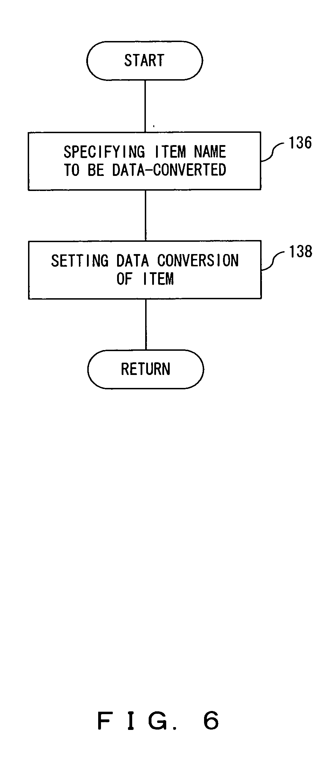

In steps 126 and 128, the linking information collection unit 200 defines input/output of each window as an information source when linking information is collected from the display screen 22. FIG. 5 is a flowchart showing the window input/output definition subroutine performed in step 126, and shows an example of data set in the subroutine. In the example shown in FIG. 3, since linking information is collected from the two windows, that is, the window Wt of the target APL 40 and the window Wr of the related APL 50, the two windows are explained below.

First, in step 140, the screen data in the window to be processed is obtained. Then, in step 142, a screen name 171 is set. In this case, the number or an ID of the screen, the name of the screen (window name), and the application name displaying the screen can be set.

Then, in step 144, The screen type determination information for definition of the image data in the window to be used in identifying a window is defined. That is, the coordinates of the image portion to be used in identifying the window to be processed, and the actual bit map data of the position are registered. For example, in the case of the window Wt of the remittance process by the target APL 40, since the image portion of the "remittance process" in the upper left window, and the image portion of the upper right portion of "Menu 00201" are used in specifying the window Wt, a pair of opposing coordinates in a rectangular area corresponding to the respective image positions and the image data of the rectangular area are registered. In the example of FIG. 5, the coordinates of the image portion of the "remittance" process is set as "51,54-160,74". Based on the origin at the upper left of the window Wt with the x coordinate set positive toward right and the y coordinate set positive downwards, the upper left peak (52,54) and the lower right peak (160,74) in the above-mentioned rectangular area are expressed. Similarly, the image area of "Menu 00201" is set as "474,37-541,56". In this case, an item ID can be added for discrimination of each registered data. For example, in the example shown in FIG. 5, the image data of "remittance process" and the image data of "Menu 00201" are assigned the item IDs of "CHK001" and "CHK002" respectively. These item IDs can be automatically by the system setting program 110 in accordance with predetermined rules, or can be set by the user. The item ID is assigned for convenience, and is not essential. Therefore, it is not necessary to set it. Thus, the set data is expressed as the screen type determination information 172 in FIG. 7.

Then, in step 146, a recognition (input) item for definition of information in a window to be collected by the linking information collection unit 200 is defined. That is, the display position of each piece of information to be collected in a window to be processed and the data attribute indicating the attribute of data displayed in the position are registered. For example, in the example shown in FIG. 3, the information to be collected from the window Wt of the target APL 40 is a CIF number and a client name. Therefore, for the CIF number, the coordinates "126, 127,-295, 147" indicating a rectangular area of an image "042-631682" and the "character data" which is the data attribute of the rectangular area are registered. For the client name, the contents "364,126-463,220" indicating the rectangular area of the image " 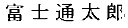 " and the data attribute ("EDIT control" in the case of Windows (registered trademark)) indicating the rectangular area as an editable text are registered. A data attribute can be, for example, image data, character data, edit control, static control (latter two are the names in the case of Windows (registered trademark), etc. In this case again, an item ID can be added for discrimination of each piece of registered data. For example, in the example shown in FIG. 5, the CIF number and the client name are assigned item IDs "IN001" and "IN002" respectively. These item IDs can be automatically assigned by the system setting program 110 based on the predetermined rules, or can be set by the user. The item IDs are added for convenience in management. Since it is not an essential item, it is not always required. Thus, the set data is shown as recognition item definition information 174 in FIG. 7.

Finally, in step S148, output item definition for definition of an item to be output (or embedded) in the window being processed is performed. That is, the coordinates indicating the position of the window in which information is to be embedded, the data name to be embedded, and the data attribute of a data-embedded item are set for each piece of data to be embedded. In the case of the Wt displayed on the target APL 40, the data to be output is a check result and a confirmation date, the coordinates of the embedded rectangular area, the embedded data name, and the data attribute of the embedded rectangular area are registered. In this case again, an item ID can be added for discrimination of each piece of registered data. For example, in the example shown in FIG. 5, the item IDs "OUT001" and "OUT002" are assigned to the check result and the confirmation date respectively. These item IDs can be automatically assigned by the system setting program 110 based on the predetermined rules, or can be set by the user. The item IDs are added for convenience in management. Since it is not an essential item, it is not always required. Thus, the set data is shown as output item definition information 176 in FIG. 7.

As described above, in step 126 shown in FIG. 4 (that is, the subroutine shown in FIG. 5), window input/output definition information 170 is set for one window. In the above-mentioned example, the input/output definition information for the window Wt of the target APL 40 is set as indicated in the column at the center in FIG. 5. The setting is performed on all windows from which linking information is obtained in the linking information collection unit 200. Therefore, in the example shown in FIG. 3, the input/output definition information for the window Wr can be set as shown in the right columns shown in FIG. 5.

It is desired that the above-mentioned item ID is added such that each piece of definition information can be discriminated and the type of a set data item and the type of window can also be discriminated. For example, in the above-mentioned example, two or three alphabetical characters and three digits of numbers are combined, but the alphabetical portions can be replaced with CHK, IN, and OUT, thereby discriminating the screen type determination information 172, the recognition item definition information 174, and the output item definition information 176. Furthermore, by comparison of the input/output definition information between the windows Wt and Wr, it is clear that the window Wt is discriminated from the window Wr by assigning 0 or 1 to the first digit of the numerical portion of the item ID. Thus, by setting the item ID, the item data retrieval speed can be increased in the actual linking operation.

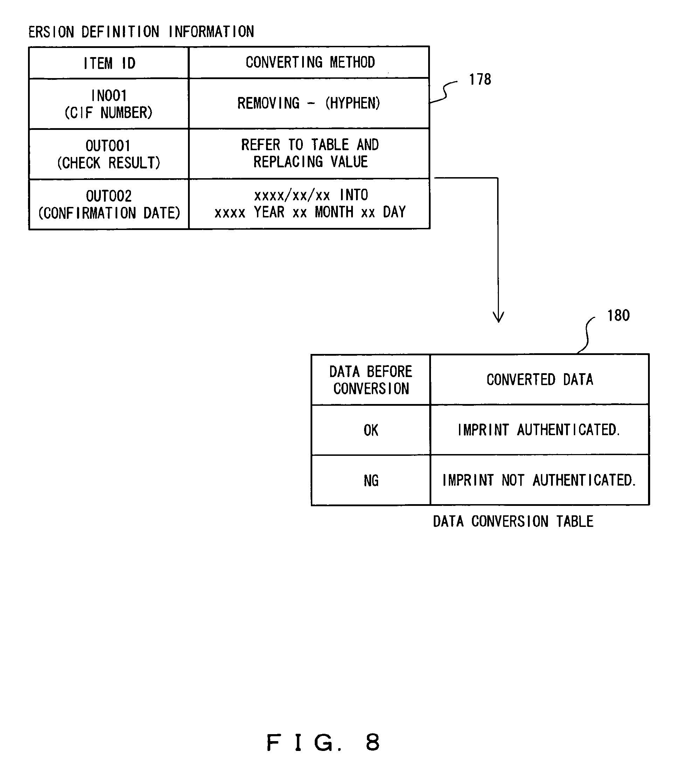

In FIG. 4 again, when the window input/output definition information 170 of each window described in steps 126 and 128 is completely set, a data conversion definition is made on all data items requiring data conversion. FIG. 6 is a flowchart of the data conversion definition subroutine performed in step 130. FIG. 8 shows an example of data conversion definition information 178 set by the data conversion definition in step 130. When the data conversion definition subroutine shown in FIG. 6 is read, an item name or an item ID which requires data conversion is specified in step S136. For example, as shown in FIG. 8, the above-mentioned CIF number, check result, confirmation date, etc. is specified. When an item ID is set, a CIF number, a check result, and a confirmation date are assigned IN001, OUT001, and OUT002 respectively as determined by the window input/output definition shown in FIG. 5. Then, in step 138, the data conversion method of the item is specified. For example, as shown in FIG. 8, "removing '-' (hyphen)" for a CIF number, "refer to a table for replacement of a value" for a check result, and "yyyy/mm/dd to be replaced with yyyy year mm month dd day" for a confirmation date, are set. FIG. 8 shows an example of a data conversion table 180 for data conversion of a check result.

When the above-mentioned setting is completed, it is checked in step 134 shown in FIG. 4 whether or not there is double registration of data in the configuration DB 150. If YES, the user is notified of it.

The order of each setting operations shown in FIG. 4 is only an example, and can be freely changed.

The data set as described above is stored in the configuration DB 150 and used in the linking operation of the screen plug 100. The linking operation for a seal check of the screen plug 100 is explained below.

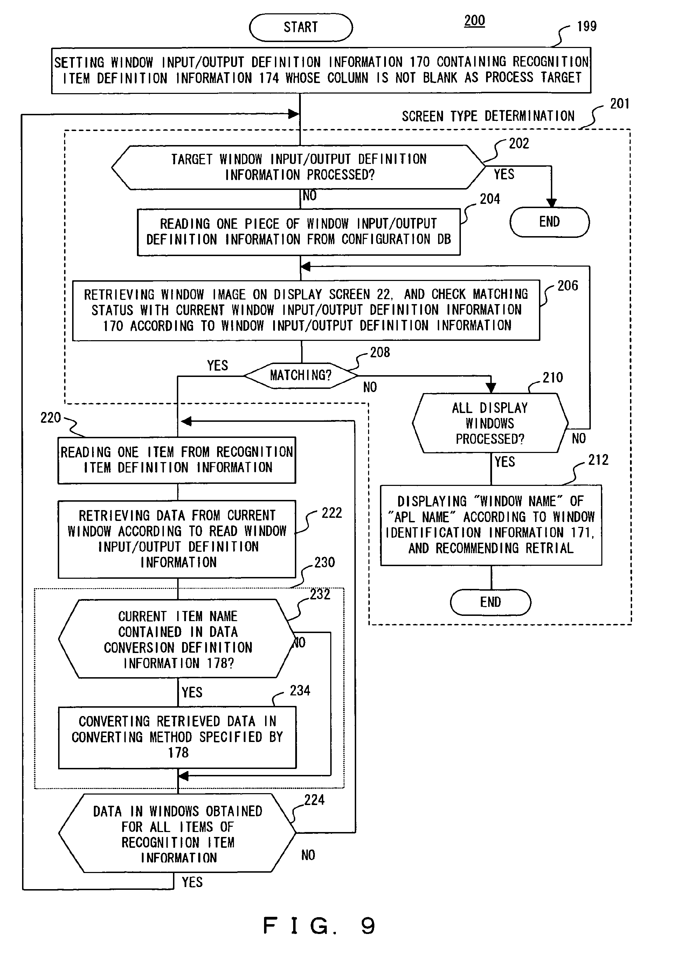

FIG. 9 is a flowchart of the linking information collecting operation performed by the CPU 11 under the control of the linking information collection unit (program) 200 according to an embodiment of the present invention. First, according to the present invention, when a linking operation is performed using the screen plug 100, it is necessary for a user to display all windows related to a link (that is, a window from which linking information is collected by the linking information collection unit 200) on the display screen 22. In this status, when the screen plug 100 is activated with the linking process name 152 set in step 112 shown in FIG. 4 specified, the linking information collection program 200 is first called and executed. That is, in step 199 shown in FIG. 9, the window input/output definition information 170 containing the recognition item definition information 174 whose columns are not blank is to be processed. That is, as shown in FIG. 5, in the example shown in FIG. 3, both windows Wt and Wr are to be processed. Then, in step 201, the screen type is determined. In the screen type determining process, a window corresponding to the window input/output definition information 170 to be processed can be transmitted one by one to the subsequent steps.

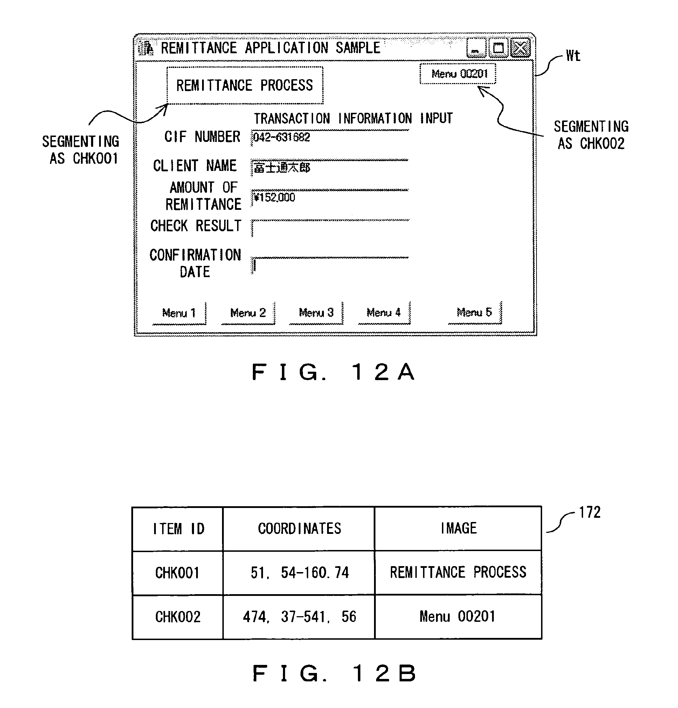

In the screen type determining step 201, it is determined in the determining step 202 whether or not the window input/output definition information 170 to be processed has been completely processed. If YES, the linking information collecting operation is terminated. If there is unprocessed window input/output definition information 170, a piece of window input/output definition information 170 is read from the configuration DB 150 in step 204. In step 206, an unprocessed window on the display screen 22 is fetched, and it is checked according to the screen type determination information 172 whether or not it matches the window of the current window input/output definition information 170. For example, if the current window is a window Wt, then it is determined whether or not the image segmented as CHK001 from the rectangular area (51,54-160,74) matches the image data of the item CHK001 of the screen type determination information 172 and whether or not the image segmented as CHK002 from the rectangular area (474,37-541,56) matches the image data of the item CHK002 of the screen type determination information 172 as shown in FIG. 12. If they do not match in step 206, control is passed to step 210, and it is determined whether or not all display windows on the display screen 22 have been completely processed. If there is an unprocessed window, control is returned to step 206. When it is determined in step 210 that all windows have been processed, it indicates that necessary windows are not displayed. Therefore, a window designated by the "APL name" and "window name" according to the window identification information 171 is displayed, and then the user is requested to retry the above-mentioned process, thereby terminating the process. When the matching result is YES in the matching step 208 the screen type determining process subroutine 201 terminates, thereby passing control to step 220.

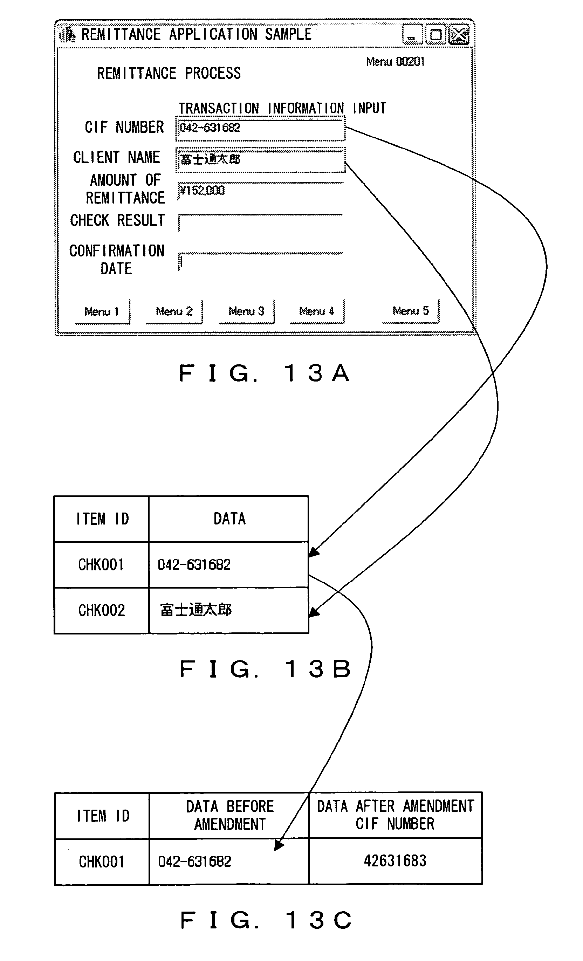

In and after steps 220, each window (referred to as a "current window") received from the screen type determining process 201 is processed. In step 220, an item (for example, a record of CHK001 corresponding to the CIF number) of the recognition item definition information 174 is read. In step 222, as shown in FIGS. 13A and 13B, data is retrieved from the current window according to the read recognition item definition information 174.

Then, the data converting step 230 is performed. In the data converting step 230, it is first determined in the determining step S232 whether or not the current item name (that is, the item name of the item read in step 220) is in the data conversion definition information 178. If NO, the data converting step 230 is terminated and control is passed to step 224. If the determination in step 232 is YES, then the data retrieved in step 222 is converted in the converting method defined according to the data conversion definition information 178 in step 234 as shown in FIG. 13C. If NO in the determining step 232, or if the process in step 234 is terminated, then it is determined in the determining step 224 whether or not the data in the window has been obtained for all items or records. If there is an item not obtained yet, control is returned to step 220, and the next item is processed. In this example, since the item of "client name" is unprocessed, the processes in steps 220 through 224 are performed on the item "client name".

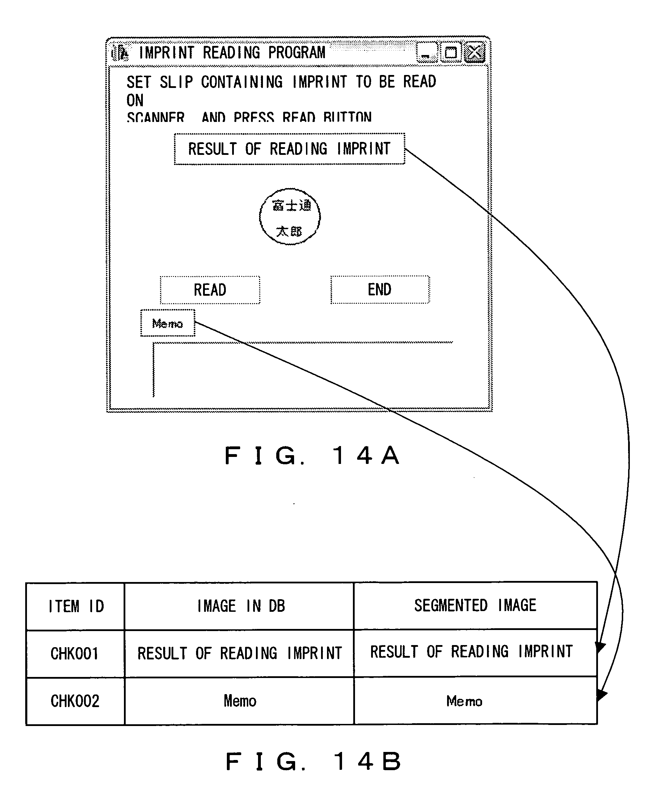

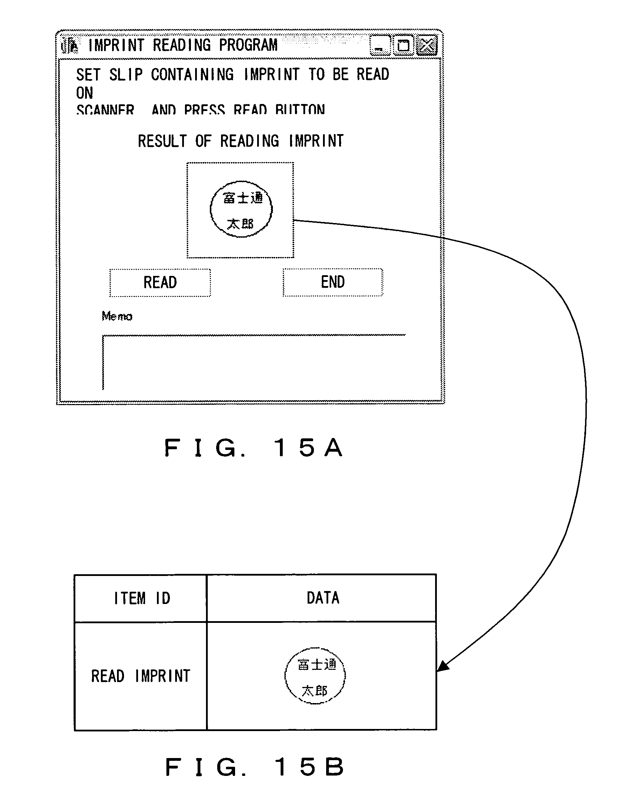

If YES in the determining step 224, control is returned to step 201, and the process is performed on the next window (in the example shown in FIG. 3, the window Wr of the related APL 50) in the above-mentioned manner. For example, the determination of window Wr in step 201 is performed by comparing as shown in FIG. 14B the image segmented as shown in FIG. 14A. The data items are extracted in steps 220 and 222 by segmenting them as shown in FIG. 15 based on the item whose item ID contained in the recognition item definition information 174 is INnnn (nnn refers to a 3-digit number) (IN101 in this example).

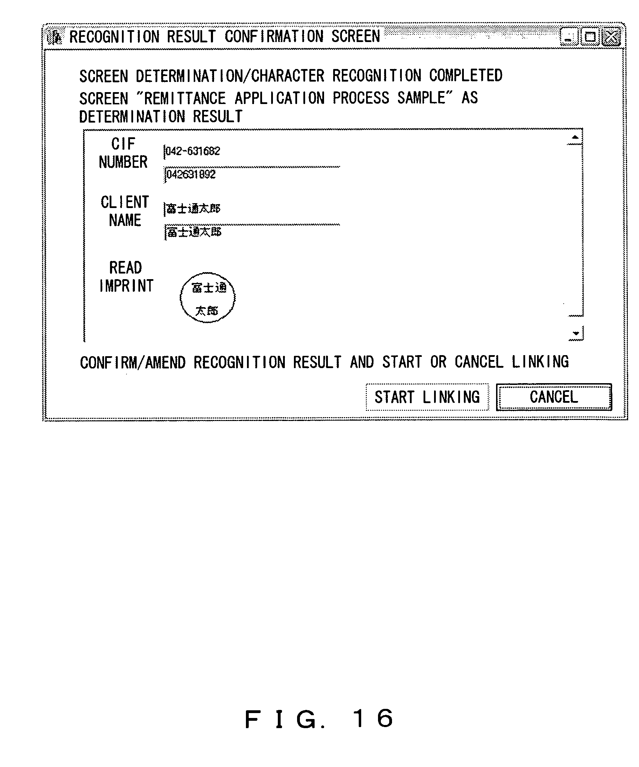

After terminating the linking information collecting process shown in FIG. 9, the screen plug 100 displays the information collected and to be passed to the linked APL 60 as shown in FIG. 16, and can confirm with the user as to whether or not the link is to be started. If the user selects starting the link, the process of the communications unit 300 is performed.

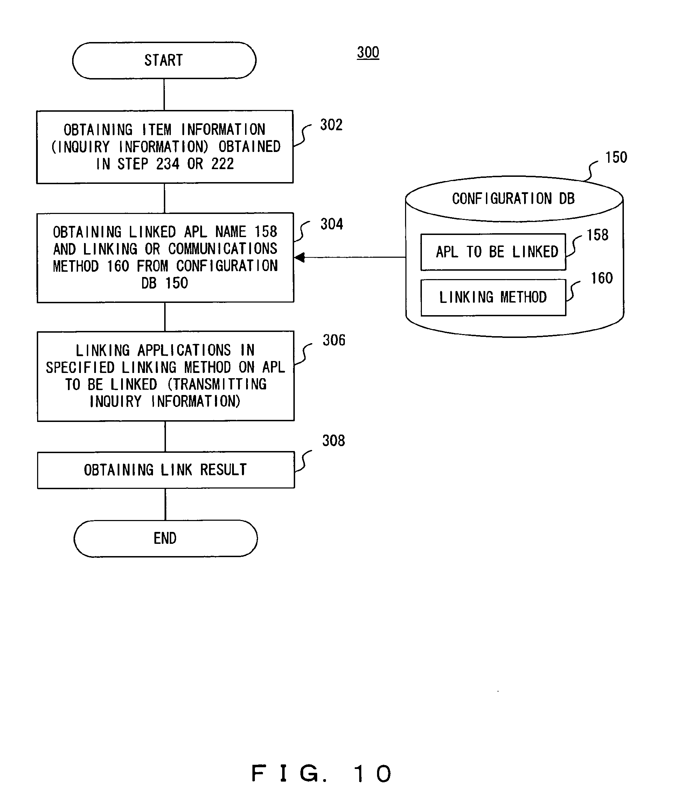

FIG. 10 is a flowchart of the communicating operation performed by the CPU 11 under the control of the communications unit 300 shown in FIG. 1. The CPU 11 receives recognition item information (inquiry information) obtained in step 234 or 222. In step 304, the link target APL name 158 and the linking or communications method 160 are retrieved from the configuration DB 150. In step 306, applications are linked in the specified linking method on the applications to be linked. That is, the recognition item information received in step 302 is transmitted.

The linked APL 60 compares the registered imprint of " 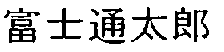 " (CIF number = 042631682) with the imprint transmitted from the communications unit 300 and makes a seal check, thereby returning the check result to the communications unit 300.

The CPU 11 obtains the check result (that is, the link result) in step 308, and terminates the linking process shown in FIG. 10.

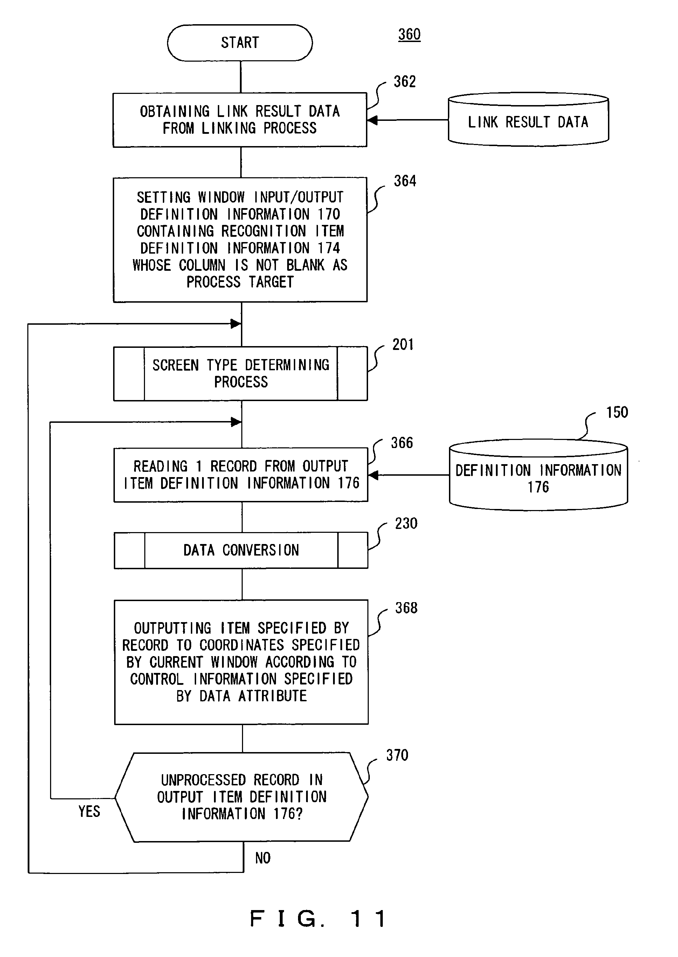

FIG. 11 is a flowchart showing an example of the operation performed by the CPU 11 under the control of the data output unit 360 shown in FIG. 1. In FIG. 11, the CPU 11 receives link result data from the communications unit 300 in step 362.

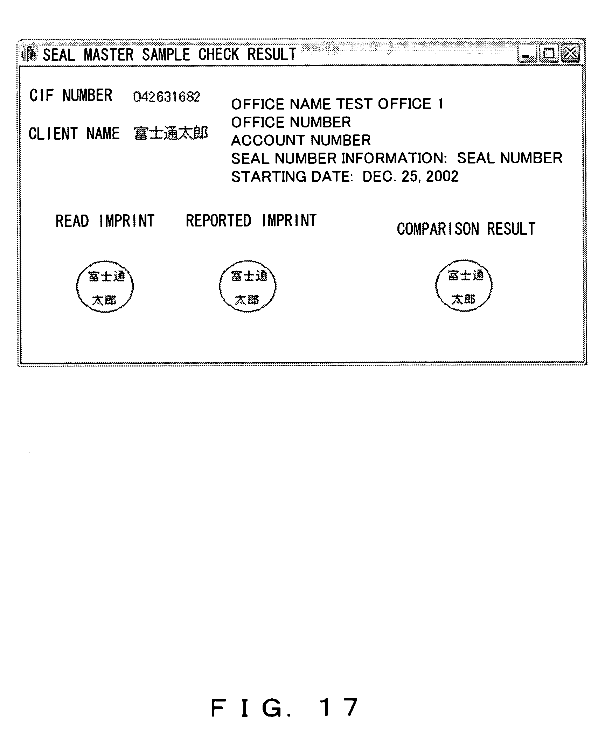

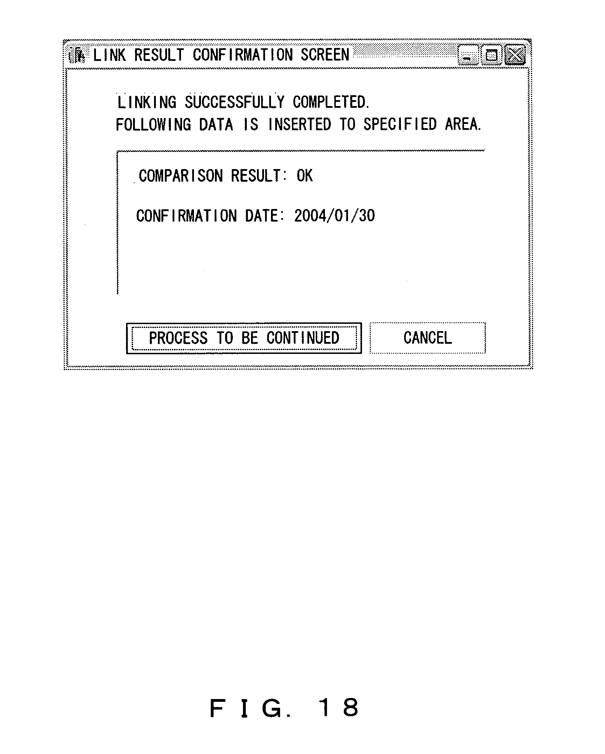

If the linked APL 60 issues "OK" as a result of a check result, and if it is assumed to return a checked image obtained by overlapping a read imprint with a reported imprint in addition to the reported imprint registered in the linked APL 60, then the data output unit 360 can display these imprint images on the screen as shown in FIG. 17. Furthermore, it is desired that the data output unit 360 displays a link result (check result) as shown in FIG. 18, and additionally confirms with the user as to whether or not the process is to be continued. In the following explanation, the user has selected continuation of the process.

In step 364, the window input/output definition information 170 containing the output item definition information 176 whose columns are not blank is set as a process target, and the screen type determining process subroutine 201 shown in FIG. 9 is performed. Then the process is performed according to the window input/output definition information 170 sequentially received from the subroutine 201.

In step 366, a record is read from the output item definition information 176 of the current window input/output definition information 170. In the example shown in FIG. 3, the item ID of OUTnnn shown in FIG. 8 is read one by one. Then, the data conversion routine 230 shown in FIG. 9 is executed, and data conversion is performed as necessary. Then, in step 368, the item specified by the current record (the record of the output item definition information 176 read in step 366) is output to the coordinates in the current window (that is, the window name 171 contained in the current window input/output definition information 170 (refer to FIG. 7)) according to the control information specified by the data attribute. In step 370, it is determined whether or not the output item definition information 176 contains an unprocessed record. If there is an unprocessed record, control is returned to step 366, and the subsequent record of the output item definition information 176 is processed.

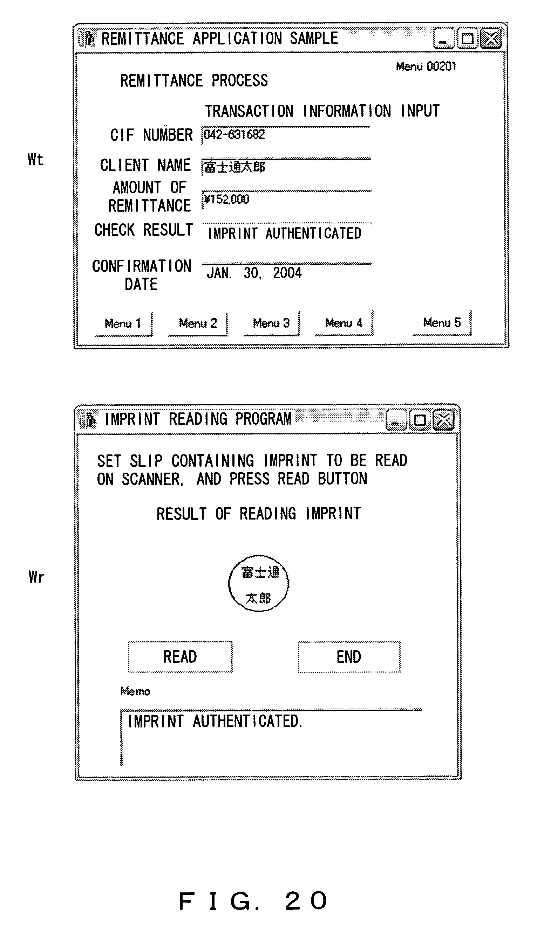

In the example shown in FIG. 3, since there are two output items as shown in FIG. 5, the conversion and output performed when the processes in steps 201, 366, 230, 368, and 370 are performed twice are explained below. The data conversion routine 230 performs conversion on the records OUT001 and OUT002 of the data conversion definition information 178 shown in FIG. 8, and the check result and the confirmation date are displayed in step 368 as shown in FIG. 20A.

In the determining step 370, if it is determined that there is no unprocessed record in the output item definition information 176, then control is returned to step 201, and the output process is performed on the next window (that is, the next window input/output definition information 170). As a result, when the process of outputting data to the window Wt of the related APL 50 is performed, the check result is output as shown in FIG. 20B based on the record "OUT101" of the output item definition information 176 shown in lower right shown in FIG. 5. When the process of the data output unit 360 is completed, control is passed from the screen type determining process routine 201 to the operating system.

Thus, according to the screen plug 100 of the present invention, link data can be collected from the display windows of a plurality of applications. Additionally, a processing result of a linked application can be output to the windows of a plurality of applications (these applications can be those from which link data have been collected, other applications, or both of them).

In the above-mentioned examples, link data is collected from display windows of a plurality of applications and transmitted to a linked application, and a processing result of a linked application is output to the windows of a plurality of applications. However, depending on the use, data can be only passed to a linking application, and a processing result of the linking application is not always returned to a target APL. That is, the data conversion unit 230 is not required.

As described above, according to the screen plug 100, applications can be linked without any amendment to a target application, a related application, or a linked application.

According to the present invention, inquiry information from a target APL to a linked APL and a processing result from a linked APL can be converted to the format of a destination.

Furthermore, according to the present invention, information can also be collected from a related APL related to a target APL, transmitted to the linked APL, and passed to a plurality of linked APLs. A processing result received from a linked APL can be output not only to a target APL but also to a linked APL related to a target APL.

The above-mentioned embodiments are only examples for explanation of the present invention. Therefore, various changed, amendments and additions can be easily made by one skilled in the art to the above-mentioned embodiments based on the technical concept or principle of the present invention.

For example, in the explanation above, the target APL 40 is discriminated from the related APL 50 for convenience in explanation, but these two applications are not practically different in software processing. Therefore, a target application and a related application are not different from each other in a process performed on a plurality of target applications.

In the above-mentioned embodiment, there is one linked APL 60, but it is obvious that there can be a plurality of them. In this case, for example, as in the case in which a plurality of database are distributed, the same linking information (inquiry information) can be transmitted to a plurality of linked applications, and different linking information can be transmitted to a plurality of linked applications. Thus, when a plurality of linked applications are used, the communications unit 300 and the data output unit 360 can select and integrate link results from a plurality of linked applications.

In the above-mentioned embodiments, it is assumed that the "remittance process" and "menu 00201" which are portions in the window for use in determination on the screen are bit map images. However, it is not necessary that the portions for determination in a window are image data, but can be an object such as an HTML tag, a URL, etc.

In the above-mentioned embodiment, the screen plug 100 is provided on the target application side, but the screen plug 100 can also be provided on the linked application side, thereby enabling display screen data to be converted between linked applications.

## Claims

1. An application linking method, comprising:
a collecting step of collecting, from a window displayed by at least one first application, necessary information item for an operation of at least one second application;
a first converting step of performing data conversion on an unmatched information item to a data format of the second application when the collected information items contain items not matching the data format of the second application;
a step of transmitting a matching information item and a data-converted information item whichever is necessary to the second application;
a step of receiving a processing result transmitted from the second application;
a second converting step of performing data conversion on an unmatched processing result to a predetermined format when a processing result contains data not matching the predetermined format; and
an output step of outputting a processing result matching a predetermined format and a data-converted processing result in a predetermined position of the window with a predetermined data attribute.

2. The method according to claim 1, wherein
said first converting step comprises a step of performing the data conversion on each of the unmatched information items according to data conversion definition information including an identifier of the information item and a description of a converting method.

3. The method according to claim 1, wherein
said second converting step comprises a step of performing the data conversion on each of the unmatched information items according to data conversion definition information including an identifier of the information item and a description of a converting method.

4. The method according to claim 3, wherein
said information collecting step comprises a step of retrieving the information item according to coordinates information about a display position in a window displaying each information item.

5. The method according to claim 3, wherein
said output step comprises a step of outputting the processing result according to output item definition information including the predetermined position and the predetermined data attribute on each of the processing result matching the predetermined format and the data-converted processing result.

6. Application linking support software having descriptions for a computer to perform the steps, comprising:
a collecting step of collecting, from a window displayed by at least one first application, necessary information item for an operation of at least one second application;
a converting step of performing data conversion on an unmatched information item to a data format of the second application when the collected information items contain items not matching the data format of the second application; and
a step of transmitting a matching information item and a data-converted information item whichever is necessary to the second application.

7. The software according to claim 6, further comprising:
a step of receiving a processing result transmitted from the second application;
a converting step of performing data conversion on an unmatched processing result to a predetermined format when the received processing result contains data not matching the predetermined format; and
an output step of outputting a processing result matching a predetermined format and a data-converted processing result to a predetermined position of the window with a predetermined data attribute.

8. The software according to claim 7, wherein
output item definition data containing a predetermined position and a predetermined data attribute for each processing result is included; and
said output step comprises a steps of outputting the processing result based on the output item definition data.

9. The software according to claim 6, further comprising:
first data conversion definition data including descriptions of an identifier of an information item or a processing result and a converting method relating to an unmatched information item, processing result, or both; and
said converting step performs the data conversion according to the data conversion definition information.

10. The software according to claim 6, wherein
said information item is either image data or an object.

11. The software according to claim 9, wherein
said converting step further comprises a step of performing the data conversion by referring to a conversion table when the converting method refers to a conversion table.

12. The software according to claim 9, wherein
said recognition item definition data for identical information items and said first data conversion definition data have identical identifiers.

13. The software according to claim 10, wherein
said output item definition data for identical information items and said second data conversion definition data have identical identifiers.

14. The software according to claim 9, further comprising
a description for a computer to execute a step of allowing a user to set the definition data.

15. A computer-readable storage medium recording application linking support software used to direct a computer to perform the steps, comprising:
a collecting step of collecting, from a window displayed by at least one first application, a necessary information item for an operation of at least one second application;
a first converting step of performing data conversion on an unmatched information item to a data format of the second application when the collected information items contain items not matching the data format of the second application;
a step of transmitting a matching information item and a data-converted information item whichever is necessary to the second application;
a step of receiving a processing result transmitted from the second application;
a second converting step of performing data conversion on an unmatched processing result to match the predetermined format when the processing result contains the unmatched processing result; and
an output step of outputting a processing result matching the predetermined format and a data-converted processing result in the predetermined position of the window with a data attribute.

16. An application linking apparatus (100), comprising:
collecting means (200) for collecting, from a window (Wt) displayed by at least one first application (40), necessary information item for an operation of at least one second application;
first converting means (230) for performing data conversion on an unmatched information item to a data format of the second application when the collected information items contain items not matching the data format of the second application;
transmitting means (300) for transmitting a matching information item and a data-converted information item whichever is necessary to the second application;
receiving means (300) for receiving a processing result transmitted from the second application (60);
second converting means (230) for performing data conversion on an unmatched processing result to a predetermined format when a processing result contains data not matching the predetermined format; and
output means (360) for outputting a processing result matching a predetermined format and a data-converted processing result in a predetermined position of the window with a predetermined data attribute.
